# EUROPÄISCHE PATENTSCHRIFT

(11) **EP 1 310 772 B1**
(45) Veröffentlichungstag und Bekanntmachung des Hinweises auf die Patenterteilung: **23.01.2008**
(21) Anmeldenummer: 02020780.9
(22) Anmeldetag: 17.09.2002
(51) Int. Cl.: G01D 5/20

(54) **Induktiver Wegsensor, integriert in einen Hydrospeicher**
Inductive displacement sensor integrated in an hydraulic accumulator
Capteur inductif de déplacement intégré dans un accumulateur hydraulique

(30) Priorität: 09.11.2001 DE 10155063
(43) Veröffentlichungstag der Anmeldung: 14.05.2003
(73) Patentinhaber: WABCO GmbH, 30453 Hannover (DE)
(72) Erfinder: Heinrich, Horst, 30455 Hannover (DE); Beimel, Jürgen, 30982 Pattensen (DE); Dokter, Anja, 31275 Lehrte (DE)
(74) Vertreter: Schrödter, Manfred

(56) Entgegenhaltungen:
- EP-A- 1 081 390
- DE-A1- 1 958 297
- DE-A1- 19 852 628

## Beschreibung

Die Erfindung bezieht sich auf einen induktiven Wegsensor, der vorzugsweise in einen Hydrospeicher integriert ist, gemäß dem Oberbegriff des Patentanspruchs 1.

Ein Hydrospeicher, allerdings ohne eingebauten Wegsensor, ist aus der DE 198 52 628 A1 bekannt. Der bekannte Speicher läßt sich vorzugsweise zur Speicherung und Bereitstellung von Druckmittel (Hydraulikflüssigkeit) in einem Pkw verwenden. Er besteht aus einem zylindrischen Gehäuse, das durch eine Bodenplatte und einen Faltenbalg in zwei getrennte Druckräume aufgeteilt ist. Dabei läßt sich der untere Druckraum über einen Anschlußstutzen an das Hydrauliksystem des Pkws anschließen. Der hiervon getrennte obere Druckraum ist mit einem geeigneten Gas, beispielsweise Stickstoff, gefüllt. Bei der Befüllung des Hydrospeichers mit Hydraulikflüssigkeit wird der Faltenbalg bei genügend hohem Flüssigkeitsdruck zusammen mit dem enthaltenen Druckgas zusammengedrückt und hält so den gewünschten Hydraulikdruck aufrecht.

Zur Kontrolle des Hydraulikdruckes sind an beliebiger Stelle der Hydraulikanlage eingebaute Drucksensoren bekannt. Aus verschiedenen Gründen ist es aber darüber hinaus wünschenswert, zusätzlich die Stellung der Bodenplatte des Hydrospeichers durch eine Wegmessung zu kontrollieren. Mit einer derartigen Kontrolle ist es möglich, unerwünschte Gasblasen in der Hydraulikanlage zu erkennen, da sich in diesem Fall auch bei einer Druckerhöhung der Hydraulikflüssigkeit durch das Zusammendrücken der Gasblasen die Bodenplatte des Hydrospeichers zunächst nicht bewegen würde.

Es ist weiter denkbar, bei einem Hydrospeicher der eingangs genannten Art die erforderliche Füllmenge für das Druckgas dadurch herabzusetzen, daß in den Speicher Füllkörper aus nicht kompressiblem Material eingesetzt werden. Dies hat den Vorteil, daß durch die derart verringerte Menge des Druckgases schädliche Temperatureinflüsse auf den Speicherdruck vermindert werden. Weiter läßt sich hierdurch auch die Steilheit der Druck- Weg-Kennlinie des Hydrospeichers erhöhen.

Ein zur Wegmessung der Bodenplatte eines Hydrospeichers geeigneter Wegsensor ist beispielsweise aus der DE 196 24 801 A1 bekannt. Der dort offenbarte induktive Wegsensor besteht aus einer Spule, in welche wegabhängig ein Eisenkern einschiebbar ist. Die Spule ist normalerweise auf einen Spulenkörper gewickelt. Dabei kann der Spulenkörper aus mehreren Kammern bestehen, in welche zur Vergleichmäßigung der Sensorkennlinie Wicklungen bzw. Wicklungsabschnitte mit unterschiedlichen Wicklungszahlen bzw. Wicklungshöhen angeordnet sind.

Falls ein Wicklungsabschnitt mit geringer Wicklungszahl bzw. -Höhe vorgesehen ist, bleibt der Ringraum zwischen der Oberfläche der Spule und dem Rand des Spulenkörpers frei. Hierdurch erhöht sich aber das durch das Druckgas ausgefüllte Volumen bzw. die Füllmenge des Hydrospeichers, wodurch die oben erwähnten Vorteile einer geringen Füllmenge abgeschwächt werden.

Der Erfindung liegt die Aufgabe zugrunde, durch geeignete Maßnahmen das Gasvolumen bzw. die Füllmenge des Hydrospeichers weiter zu verringern.

Diese Aufgabe wird durch die im Patentanspruch 1 enthaltene Erfindung gelöst. Die Unteransprüche enthalten zweckmäßige Weiterbildungen.

Durch die erfindungsgemäße Aufbringung einer weiteren Wicklung über den Nutzwicklungen, wobei die weitere Wicklung vorzugsweise aus einem Kunststoffaden besteht, ist es gelungen, eine zusätzliche Volumenverringerung des Druckgases im Hydrospeicher unter Nutzung kerkömmlicher, kostengünstiger Wickeltechnologie zu erzielen, die auch für die im Speicher herrschenden hohen Drücke bis zu 300 bar geeignet ist. Dies ist dadurch möglich, daß das zusätzliche Volumen durch die weitere Wicklung druckdurchlässig ist.

Würde man dagegen die nicht aufgefüllten Spulenkammern mit einem druckundurchlässigen Material ausfüllen, beispielsweise durch eine Vergußmasse, so würde die Vergußmasse dem im Hydrospeicher herrschenden Druck standhalten müssen, damit die Masse nicht in unzulässiger Weise auf die Nutzwicklung drücken kann, was zu Meßwertverfälschung oder zur Zerstörung des Sensors führen würde. Die Vergußtechnik ist also risikobehaftet und wäre technisch nur mit Schwierigkeiten zu realisieren.

Denkbar wäre natürlich auch das Auffüllen der nur teilweise benutzten Wicklungskammern mit separaten, druckfesten Formkörpern. Hierdurch würde sich jedoch gegenüber der erfindungsgemäßen Lösung eine Verteuerung des Sensors durch zusätzliche Teile und Montageaufwand ergeben.

Außerdem lassen sich durch Füllstücke oder Formkörper nicht so hohe Anteile an geforderter Volumenverdrängung erzielen, wie dies mit der erfindungsgemäß vorgeschlagenen Volumenwicklung möglich ist.

Die Erfindung wird im folgenden anhand einer Zeichnung näher erläutert.

Diese zeigt in
- Fig. 1: einen Querschnitt durch den Hydrospeicher, und in
- Fig. 2: einen Querschnitt durch den im Hydrospeicher eingebauten induktiven Wegsensor.

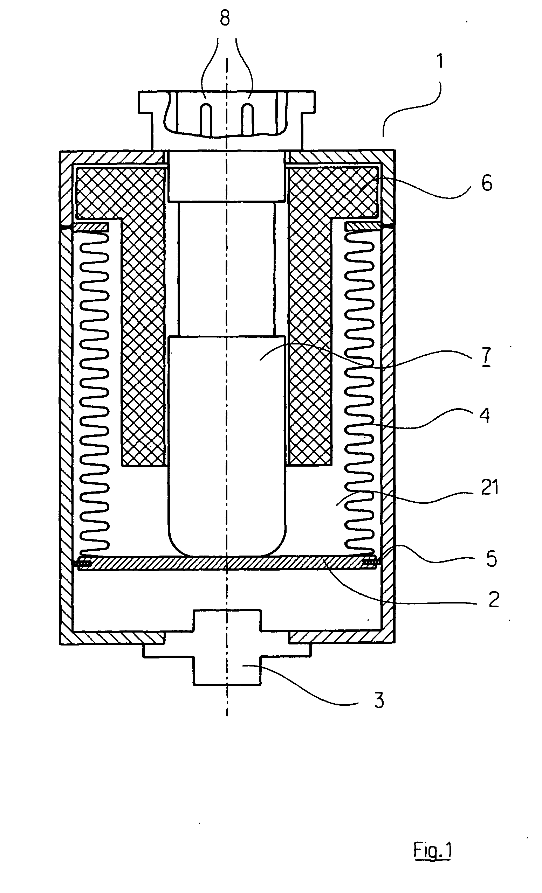

Der in der Fig. 1 dargestellte Hydrospeicher hat eine zylindrische Außenwand (1) aus Metall, einen Fluidanschluß (3), der mit dem Hydrauliksystem eines Fahrzeugs, z.B. eines PKW's, in Verbindung steht, eine Bodenplatte (2), welche in senkrechter Richtung verschiebbar ist und mit einer Führung (5) gegen die Außenwand (1) abgestützt ist, einen metallischen Faltenbalg (4), welcher gasdicht an der Bodenplatte (2) und am entgegengesetzten Ende an der Außenwand (1) beispielsweise durch Schweißung befestigt ist, sowie einen druckfesten kreissymmetrischen Füllkörper (6) zur Verringerung des im Hydrospeicher befindlichen Gasvolumens.

Zur Messung der jeweiligen Stellung der Bodenplatte (2) ist ein Wegsensor (7) zentral eingebaut. Der Wegsensor (7) besitzt eine durchgehend gewickelte Spule, dessen beiden Enden an Anschlußkontakten (8) befestigt sind.

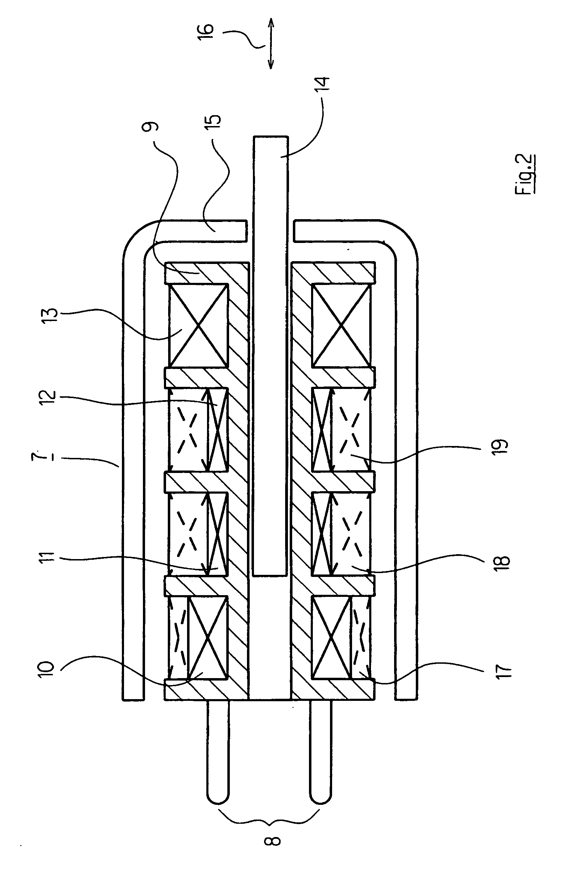

Der genaue Aufbau des Wegsensors (7) ist in der Fig. 2 dargestellt. Wie man erkennt, ist die Spule des Wegsensors (7) in z. B. vier ringförmigen Kammern eines Spulenkörpers (9) angeordnet. Dabei ist die jeweilige Windungszahl der Teilspulen unterschiedlich. So ist die rechte Kammer mit einer elektrischen Wicklung (13) vollständig ausgefüllt. Dagegen sind die weiteren Kammern mit elektrischen Wicklungen (10, 11, 12) nur teilweise bewickelt. Diese unterschiedliche Aufteilung der Wicklungen dient dazu, die Kennlinie des Wegsensors zu vergleichsmäßigen. Die beiden Enden der hintereinander geschalteten Wicklungen (10, 11, 12, 13) sind an zwei Anschlußkontakten (8) befestigt, beispielsweise durch Lötung oder Schweißung. Der Wegsensor (7) besitzt weiter einen wegabhängig verschiebbaren Kern (14) aus magnetisierbarem Werkstoff, beispielsweise Eisen, der in Richtung des Pfeils (16) verschiebbar ist. Das freiliegende Ende des Kerns (14) stützt sich an der Bodenplatte (2) ab, wodurch die jeweilige Stellung der Bodenplatte (2) meßbar ist. Zur Verbesserung der magnetischen Eigenschaften des Wegsensors (7) ist weiter eine Haube (15) aus magnetisierbarem Material vorgesehen, welche den Spulenkörper (9) umgibt und eine Öffnung für den Kern (14) aufweist. Der Aufbau derartiger induktiver Wegsensoren sowie deren elektronische Auswertung sind dem Fachmann bekannt.

Erfindungsgemäß ist nun zum Auffüllen der durch die elektrischen Wicklungen nicht vollständig gefüllten Kammern des Spulenkörpers (9) je eine weitere Wicklung (17, 18, 19) ohne elektrischen Anschluß vorzugsweise über die Wicklungen (10, 11, 12) gewickelt. Auf diese Weise sind alle Kammern vollständig aufgefüllt. Hierdurch wird die gewünschte, zusätzliche Volumenverringerung des im Hydrospeicher befindlichen Druckgases erreicht.

Zweckmäßig kann die weitere Wicklung (17, 18, 19) aus einem Kunststoffaden bestehen. Dabei werden die Enden des Kunststoffadens in geeigneter Weise festgelegt.

Die weitere Wicklung (17, 18, 19) kann aber auch aus einem nicht magnetischem Draht, beispielsweise demselben Draht wie die Nutzwicklungen (10, 11, 12, 13) bestehen, wobei dann aber die Enden dieser weiteren Wicklungen nicht angeschlossen bzw. isoliert sind.

Obwohl der Wegsensor gemäß der Erfindung vorzugsweise in einem Hydrospeicher einsetzbar ist, kann er natürlich auch an anderen Stellen, wo ein problematisch hoher Gasdruck herrscht, verwendet werden.

## Patentansprüche

1. Induktiver Wegsensor, vorzugsweise integriert in einen Hydrospeicher (7), mit einem Spulenkörper (9) mit mindestens einer Wicklung (10, 11, 12, 13) aus elektrisch leitfähigem Draht, welche in mindestens einer Kammer des Spulenkörpers (9) angeordnet ist, **dadurch gekennzeichnet, daß** zusätzlich zur Wicklung (10, 11, 12, 13) eine weitere Wicklung (17, 18, 19) ohne elektrischen Anschluß vorgesehen ist, die über oder unter die Wicklung (10, 11, 12, 13) gewickelt ist.

2. Induktiver Wegsensor nach Anspruch 1, **dadurch gekennzeichnet, daß** die Wicklungshöhe der weiteren Wicklung (17, 18, 19) so groß ist, daß dadurch die Kammern des Spulenkörpers (9) ausgefüllt sind.

3. Induktiver Wegsensor nach einem oder beiden der Ansprüche 1 bis 2, **dadurch gekennzeichnet, daß** die weitere Wicklung (17, 18, 19) aus einem Kunststoffaden besteht.

4. Induktiver Wegsensor nach einem oder beiden der Ansprüche 1 bis 2, **dadurch gekennzeichnet, daß** die weitere Wicklung (17, 18, 19) aus einem nicht magnetisierbaren Draht besteht.

## Claims

1. Inductive displacement sensor, preferably integrated into a hydraulic accumulator (7), having a coil former (9) with at least one winding (10, 11, 12, 13) of electrically conductive wire, which winding is arranged in at least one chamber of the coil former (9), **characterised in that**, in addition to the winding (10, 11, 12, 13), a further winding (17, 18, 19) without an electrical connection is provided, which is wound over or beneath the winding (10, 11, 12, 13).

2. Inductive displacement sensor according to claim 1, **characterised in that** the winding height of the further winding (17, 18, 19) is so great that the chambers of the coil former (9) are as a result filled up.

3. Inductive displacement sensor according to one or both of claims 1 and 2, **characterised in that** the further winding (17, 18, 19) consists of a synthetic thread.

4. Inductive displacement sensor according to one or both of claims 1 and 2, **characterised in that** the further winding (17, 18, 19) consists of a non-magnetic wire.

## Revendications

1. Capteur inductif de déplacement, de préférence intégré dans un accumulateur hydraulique (7), comportant un corps de bobine (9) avec au moins un enroulement (10, 11, 12, 13) d'un fil électriquement conducteur, qui est disposé dans au moins une chambre du corps de bobine (9), **caractérisé en ce que**, en plus de l'enroulement (10, 11, 12, 13), un autre enroulement (17, 18, 19) est prévu sans connexion électrique, qui est enroulé au-dessus ou en dessous de l'enroulement (10, 11, 12, 13).

2. Capteur inductif de déplacement selon la revendication 1, **caractérisé en ce que** la hauteur de l'enroulement de l'autre enroulement (17, 18, 19) est si grande qu'il remplit les chambres du corps de bobine (9).

3. Capteur inductif de déplacement selon l'une ou les deux des revendications 1 à 2, **caractérisé en ce que** l'autre enroulement (17, 18, 19) est constitué d'un fil synthétique.

4. Capteur inductif de déplacement selon l'une ou les deux des revendications 1 à 2, **caractérisé en ce que** l'autre enroulement (17, 18, 19) est constitué d'un fil non magnétisable.
